# EUROPÄISCHE PATENTANMELDUNG

(11) **EP 3 385 910 A1**
(43) Veröffentlichungstag der Anmeldung: **10.10.2018**
(21) Anmeldenummer: 18162099.8
(22) Anmeldetag: 15.03.2018
(51) Int. Cl.: G06T 7/579, G06T 7/246

(54) **VERFAHREN ZUR IDENTIFIKATION VON KORRESPONDIERENDEN BILDBEREICHEN IN EINER FOLGE VON BILDERN**

(30) Priorität: 05.04.2017 DE 102017107335
(71) Anmelder: Testo SE & Co. KGaA, 79853 Lenzkirch (DE)
(72) Erfinder: Wulff, Robert, 79098 Freiburg (DE); Wolters, Dominik, 24220 Flintbek (DE)
(74) Vertreter: Börjes-Pestalozza, Henrich

(57) **Zusammenfassung**

Ein Verfahren zur Identifikation von korrespondierenden Bildbereichen in einer Folge von Bildern (1; 21) wobei jedem Merkmal (P1a, P2a) aus einem ersten Bild nun mittels Korrespondenzgraphen eines oder mehrere Merkmale (P2a,P2b) aus einem zweiten Bild zugeordnet werden. Die Kosten (C1-C5), die mit jeder Zuordnung verbunden sind, werden durch Funktionen dargestellt. Anhand dieser Kosten erfolgt die konkrete Auswahl einer eindeutigen Korrespondenz für jedes Merkmal, die dann für die weiteren Berechnungen verwendet wird. (Fig. 3)

## Beschreibung

Die Erfindung beschreibt ein Verfahren zur Identifikation von korrespondierenden Bildbereichen in einer Folge von Bildern, wobei in den Bildern jeweils eine Vielzahl von Merkmalen computergestützt detektiert und zu den Merkmalen jeweils Deskriptoren computergestützt extrahiert werden, wobei ein erstes Merkmal eines ersten Bildes und ein zweites Merkmal eines zweiten Bildes der Folge als zueinander inhaltlich korrespondierend erkannt werden, wenn zumindest die zugehörigen Deskriptoren nach einer vorgegebenen Regel zueinander ähnlich sind, so dass ein erster Bildbereich des ersten Bildes mit dem ersten Merkmal als inhaltlich korrespondierend zu einem zweiten Bildbereich des zweiten Bildes mit dem zweiten Merkmal erkannt wird.

Durch die Identifikation der korrespondierenden Bildbereiche in einer Folge von Bildern kann beispielsweise eine Bewegung des Bildbereichs erkannt werden, falls die Bilder von einer stationären Position aufgenommen wurden.

Es ist jedoch auch möglich die verschiedenen Positionen der Bildbereiche in den einzelnen Bildern, wenn diese von unterschiedlichen Kameraposen aufgenommen wurden, zur Erstellung eines dreidimensionalen Modells zu verwenden.

Aus der DE 10 2016 002 186 A1 ist es beispielsweise bekannt, aus einer Folge von Bildern eines Objektes, die von verschiedenen Standorten und/oder Perspektiven aufgenommen wurden, ein dreidimensionales Modell des Objekts zu berechnen.

Dabei ist es sehr stark von der Geometrie und der Oberfläche des aufgenommenen Objekts abhängig wie gut einzelne Merkmale in einem Bild identifizierbar sind. In der Regel werden dazu zu den einzelnen Merkmalen Deskriptoren berechnet, mit denen das Merkmal besser beschrieben und identifiziert werden kann. Dennoch kann es schwierig sein, die einzelnen Merkmale innerhalb der einzelnen Bilder zu identifizieren und untereinander zuzuordnen. Eine besondere Schwierigkeit stellen dabei Merkmale dar, die in einem Bild nicht vorhanden sind, weil sie beispielsweise verdeckt sind oder durch die Perspektive nicht sichtbar sind. Dabei kann es leicht zu falschen Zuordnungen kommen, falls ein anderes Merkmal einen Deskriptor aufweist, der ähnlich genug ist.

Dies kann insbesondere bei Objekten auftreten, die viele ähnliche Merkmale aufweisen. Eine Gebäudefassade mit mehreren gleichen Fenstern ist beispielsweise ein solches Objekt. Je nach Änderung der Aufnahmeposen zwischen zwei Bildern, kann es hier beispielsweise vorkommen, dass ein Fenster eines Bildes in einem folgenden Bild mit einem benachbarten Fenster identifiziert wird.

In einem solchen Fall unterscheiden sich die Bildbereiche nicht ausreichend, so dass die extrahierbaren Deskriptoren nicht genügend Unterscheidungskraft aufweisen. Eine Erstellung eines dreidimensionalen Modells ist dann nicht fehlerfrei möglich.

Aufgabe der Erfindung ist es daher ein Verfahren und eine Vorrichtung zu schaffen, die eine bessere Identifizierung der Merkmale in einer Bildfolge ermöglicht, so dass beispielsweise ein dreidimensionales Modell besser und einfacher computergestützt berechenbar ist.

Diese Aufgabe wird erfindungsgemäß durch ein Verfahren mit den kennzeichnenden Merkmalen des Anspruch 1 und ein Aufmaßgerät mit den Merkmalen des Anspruchs 6 gelöst.

Das erfindungsgemäße Verfahren ist insbesondere dadurch gekennzeichnet, dass für die Erkennung einer inhaltlichen Korrespondenz zusätzlich geprüft wird, ob wenigstens ein erstes weiteres Merkmal M1B, dass zu dem ersten Merkmal M1A in dem ersten Bild benachbart ist, zu einem zweiten weiteren Merkmal M2B, das in dem zweiten Bild zu dem zweiten Merkmal M2A benachbart ist, nach einer vorgegeben Regel ähnlich ist.

Entscheidend ist es hier, dass ein Merkmal A mit wenigstens einem weiteren Merkmal B in eine nachbarschaftliche Beziehung gesetzt wird. Benachbart kann hierbei beispielsweise bedeuten, dass der Abstand zwischen den Merkmalen im Bild unterhalb einer vorgebaren oder einstellbaren Grenze liegt. Es ist auch möglich, dass beiden Merkmale in einer geometrischen und/oder topographischen Beziehung stehen.

Auf diese Weise lassen sich jeweils ein erstes Merkmal M1A und ein erstes weiteres Merkmal M1B zu einer Merkmalsgruppe zusammenfassen. In einem weiteren Bild kann nun ausgehend von dem zweiten Merkmal M2A, das dem ersten Merkmal M1A entsprechen soll, zusätzlich untersucht werden, ob auch in dem zweiten Bild ein zweites weiteres Merkmal M2B vorhanden ist, das dem ersten weiteren Merkmal M1B entspricht und das in einer ähnlichen Nachbarschaft zum zweiten Merkmal liegt. Das bedeutet, eine ähnliche Merkmalsgruppe ist im weiteren Bild vorhanden.

Gegenüber dem Stand der Technik kann somit die Identifizierung wesentlich verbessert werden, da neben den Deskriptoren mindestens ein zusätzliches Unterscheidungskriterium vorhanden ist.

Auf diese Weise kann auch bei vielen ähnlichen Bildbereichen ein Merkmal sicher identifiziert werden, da die Nachbarschaften eine weitere Unterscheidung erlauben.

Darüber hinaus kann die Identifizierung der Merkmale nahezu beliebig verbessert werden, in dem die Anzahl der betrachteten benachbarten Merkmale erhöht wird.

Insbesondere sieht das erfindungsgemäße Verfahren vor, dass eine inhaltliche Korrespondenz zwischen dem ersten Merkmal M1A und dem zweiten Merkmal M2A bestätigt wird, wenn die Prüfung ergab, dass das erste weitere Merkmal M1B und das zweite weitere Merkmal M2B zueinander ähnlich sind, und/oder verworfen wird, wenn die Prüfung ergab, dass es kein erstes weiteres Merkmal M1B und kein zweites weiteres Merkmal M2B gibt, die zueinander ähnlich sind.

In einer vorteilhaften Ausführung der Erfindung wurden das erste Merkmal M1A und das zweite Merkmal M2A durch eine Ecken- und/oder Kantendetektion detektiert und/oder sind keine robusten Merkmale.

Robuste Merkmale sind solche Merkmale, die durch einen Algorithmus in einem Bild sehr gut und sicher detektierbar sind. Diese robusten Merkmale sind auch innerhalb einer Bildfolge sicher identifizierbar. In der Regel liegen diese robusten Merkmale jedoch in Bildbereichen, die keine für einen Benutzer relevanten Merkmale aufweisen. Das erfindungsgemäße Verfahren verbessert daher insbesondere die Identifizierbarkeit von solchen interessanten Merkmalen, die jedoch keine robusten Merkmale sind.

Zweckmäßigerweise sind das erste weitere Merkmal M2A und das zweite weitere Merkmal M2B optimiert für eine inhaltliche Zuordnung von Bildbereichen in einer Folge von Bildern. Das erste weitere Merkmal M2A ist aufgrund seiner Eigenschaft in einem Folgebild sehr sicher eindeutig mit dem zweiten weiteren Merkmal identifizierbar. Es ist daher einfach zu prüfen, ob dieses zweite weitere Merkmal M2B auch in dem Folgebild in Nachbarschaft zu einem Merkmal M2A liegt, das ähnlich zu dem ersten Merkmal M1A ist. Liegt diese Ähnlichkeit vor, kann sehr sicher davon ausgegangen werden, dass das zweite Merkmal M2A identisch zum ersten Merkmal M1A ist. Die Identifizierung erfolgt dabei im Wesentlichen über die optimiert auffindbaren weiteren Merkmale und deren Nachbarschaft zu anderen Merkmalen.

Insbesondere vorteilhaft ist es dabei, wenn das erste weitere Merkmal und das zweite weitere Merkmal robuste Merkmale sind. Robuste Merkmale können beispielsweise nach einem der Verfahren SIFT (Scale-invariant feature transform), SURF (Speeded Up Robust Features) oder dergleichen bestimmt werden.

Vorzugsweise wird für jedes Merkmal ein separates weiteres Merkmal bestimmt. Es ist jedoch auch möglich für zwei Merkmale dasselbe weitere Merkmal zu verwenden, falls beispielsweise keine zusätzlichen weiteren Merkmale zur Verfügung stehen. Dabei unterscheidet sich dann die Nachbarschaftsbeziehung zwischen den Merkmalen, so dass auch in diesem Fall eine eindeutige Zuordnung zwischen den Merkmalen möglich ist.

In einer vorteilhaften Ausführung der Erfindung gilt ein erstes weiteres Merkmal M1B als benachbart zu einem ersten Merkmal M1A, wenn es im ersten Bild innerhalb eines vorgegebenen Umkreises um das erste Merkmal liegt. Bei der Suche kann auch der Radius des Umkreises schrittweise vergrößert werden, bis ein passendes weiteres Merkmal gefunden wurde.

Zusätzlich oder alternativ kann ein Graph bestimmt werden, der eine Beziehung zwischen dem ersten Merkmal M1A und dem ersten weiteren Merkmal M1B modelliert. Ein solcher Graph kann insbesondere ein topologischer Graph sein. Ein topologischer Graph bestimmt dabei beispielsweise die Lage eines Punktes zu einer Linie in einem Bild. Vereinfacht kann somit ein Punkt beispielsweise als Startpunkt einer Linie oder als Schnittpunkt von zwei Linien definiert werden. Diese Eigenschaften sind jedoch auch abhängig von der Aufnahmepose. So kann ein Punkt in einem Bild am Anfang einer Linie zu sehen sein, der gar nicht mit der Linie verbunden ist. In einem weiteren Bild ist dieser Punkt dann entfernt von der Linie.

In einer zweckmäßigen Weiterbildung werden Punktmerkmale hauptsächlich als Schnittpunkte von Linien, insbesondere Geraden definiert. Die nachbarschaftlichen Beziehungen liegen hier jeweils abwechselnd zwischen Punkt und Linie vor und können ebenfalls durch Graphen beschrieben werden.

Insbesondere lassen sich auf diese Weise auch komplexe und/oder geschlossene Formen durch Aneinanderreihen von Punkten und Linien bilden.

Es ist dabei auch möglich für jedes erste Merkmal M1A und jedes zweite Merkmal M2A und jedes erste weitere Merkmal M1B und jedes zweite weitere Merkmal M2B gegenseitig wechselseitige Beziehungen zu erstellen und zu betrachten. Auf diese Weise entsteht eine Kreuzzuordnung, die auch über mehre Merkmale erfolgen kann. Diese Kreuzzuordnung erlaubt eine besonders genaue Zuordnung, da Nachbarschaften in mehrere Dimensionen ausgewertet werden.

Insbesondere wird für Merkmale des ersten Bildes jeweils ein Korrespondenzgraph mit in Frage kommenden Merkmalen des zweiten Bildes erstellt. Jeder dieser Korrespondenzgraphen enthält dann eine Kostenfunktion als Maß für die Ähnlichkeiten der Merkmale. Aufgrund der Kostenfunktionen kann dann eine Auswahl des korrespondierenden Merkmals erfolgen. Liegen beispielsweise im zweiten Bild zwei Merkmale im Umkreis um ein Merkmal, dann kann die Kostenfunktion den Abstand in Pixeln enthalten, so dass dieser mit dem Abstand im ersten Bild verglichen werden kann. Eine Entscheidung, welches der beiden Merkmale nun das zum ersten Merkmal zugehörige ist, kann dann anhand dieser Kostenfunktion bestimmt werden.

Die identifizierten Merkmale können für verschiedene Zwecke verwendet werden. Eine besonders vorteilhafte Ausführung der Erfindung, stellt ein Verfahren zur Berechnung von 3D-Koordinaten zu einem ersten Merkmal in einem ersten Bild einer Folge von Bildern und einem zweiten Merkmal eines zweiten Bildes der Folge zur Verfügung, wobei ein erfindungsgemäßes Verfahren zur Identifikation von korrespondierenden Bildbereichen wie oben beschrieben ausgeführt wird und anhand der vorzugsweise bestätigten inhaltlichen Korrespondenzen eine 3D-Koordinate zu dem ersten Merkmal und zweiten Merkmal computergestützt berechnet werden, insbesondere in einem zumindest aus dem ersten weiteren Merkmal und dem zweiten weiteren Merkmal generierten 3D-Modell. Die Merkmale dienen somit als Grundlage für die Erstellung eines dreidimensionalen Modells eines im Bild enthaltenen Objekts, von dem die Merkmale Bestandteile sind. Diese Berechnung des Modells kann nach einem beliebigen bekannten Verfahren, etwa einem Structure-from-motion Verfahren, erfolgen. Der Vorteil der Erfindung besteht jedoch in der wesentlich verbesserten Identifizierung der Merkmale durch die nachbarschaftlichen Beziehungen. Das so erstellbare Modell kann daher Wesentlich besser und genauer berechnet werden.

Die Erfindung umfasst weiterhin ein Aufmaßgerät das insbesondere zur Durchführung eines erfindungsgemäßen Verfahrens geeignet ist.

Eine vorteilhafte Ausführung umfasst ein Aufmaßgerät mit einer Kamera zu einer Aufnahme einer Folge von Bildern und einer Datenverarbeitungseinheit, die zu einer Ausführung eines Verfahrens nach dem vorangehenden Anspruch eingerichtet ist, wobei die Datenverarbeitungseinheit zu einer computergestützten Berechnung einer geometrischen Größe eines in den Bildern der Folge abgebildeten Untersuchungsobjektes anhand von mit dem Verfahren berechneten 3D-Koordinaten eingerichtet ist, insbesondere wobei Ausgabemittel zu einer Ausgabe eines berechneten Wertes der geometrischen Größe ausgebildet sind.

Die Erfindung ist anhand einiger vorteilhafter Ausführungsbeispiele und mit Bezug auf die nachfolgenden Zeichnungen näher beschrieben.

Es zeigt:
- Fig. 1:: ein erstes Bild mit einer Linienstruktur und mehreren Merkmalen
- Fig. 2:: ein zweites Bild der Linienstruktur aus einer anderen Aufnahmepose,
- Fig. 3: eine schematische Darstellung der Darstellung der Nachbarschaftsbeziehungen über Graphen,
- Fig. 4: eine schematische Darstellung eines erfindungsgemäßen Aufmaßgeräts.

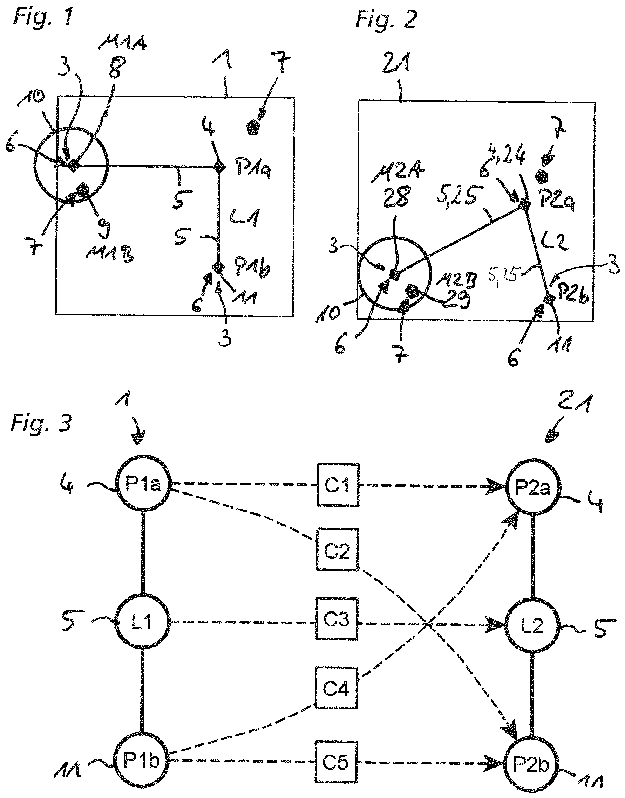

Die Fig. 1 zeigt beispielhaft ein erstes Bild 1 in dem eine im Wesentlichen L-förmige Struktur 2 enthalten ist. Die Struktur 2 weist zwei Endpunkte 3 und einen Knickpunkt 4 auf, die durch zwei zueinander rechtwinklige Linien 5 verbunden sind.

Die Punkte 3, 4 und Linien 5 der Struktur 2 sind als Merkmale 6 beispielsweise durch ein Kanten-Detektionsverfahren erkannt worden.

Weiterhin sind im Bild 1 zwei robuste Merkmale 7 im Sinne der Erfindung vorhanden. Diese robusten Merkmale 7 sind beispielsweise durch SIFT oder SURF Verfahren erkannt worden.

In Fig. 2 ist ein zweites Bild 21 gezeigt, welches dieselbe Struktur 2 zeigt, das jedoch aus einer anderen Kamerapose aufgenommen wurde. Aufgrund der Aufnahmeperspektive erscheint die L-förmige Struktur 2 nun in einem spitzen Winkel und gegenüber dem ersten Bild 1 gedreht. Im zweiten Bild 21 können die Linien 25 und Punkte 24 zwar ebenfalls durch ein bekanntes Verfahren computergestützt gefunden werden, die Identifizierung mit den Linien 5 und Punkten 4 des ersten Bildes 1 kann jedoch aufgrund der perspektivischen Verzerrung schwierig sein.

Erfindungsgemäß werden daher nachbarschaftliche Beziehungen zwischen den Merkmalen festgestellt und betrachtet.

Zur Verdeutlichung des Verfahrens wird der Einfachheit halber zunächst nur ein Merkmal M1A 8 betrachtet. Hier der linke Startpunkt 3 der waagrecht verlaufenden Linie 2.

Im ersten Bild 1 ist der Startpunkt als ein erstes Merkmal M1A 8 erkannt. Im zweiten Bild 21 wurde der Startpunkt als ein zweites Merkmal M2A 28 erkannt. Die Merkmale sind zwischen den Bildern aufgrund der unterschiedlichen Perspektiven nicht einfach identifizierbar.

Im ersten Bild 1 liegt das erste Merkmal M1A 8 jedoch unmittelbar benachbart zu einem ersten weiteren Merkmal M1B 9, das im Beispiel ein robustes Merkmal 7 ist. Benachbart bedeutet hier beispielsweise, dass die beiden Merkmale etwa innerhalb eines Umkreises 10 mit einem vorbestimmten Radius liegen.

Dieses robuste Merkmal 7 hat die Eigenschaft, dass es in Bildern sehr gut identifizierbar ist, und zwar unabhängig von der Perspektive oder Aufnahmepose. Im zweiten Bild 21 kann das zweite weitere Merkmal M2B 29 daher sehr einfach erkannt und mit dem ersten weiteren Merkmal M1B 9 des ersten Bildes 1 identifiziert werden.

Da nun bekannt ist, dass im ersten Bild 1 in der Nachbarschaft des ersten weiteren Merkmals M1B 9 ein erstes Merkmal M1A 8 liegt, kann nun im zweiten Bild 21 ebenfalls in der Nachbarschaft des zweiten weiteren Merkmals M2B 29 ein zweites Merkmal M2A 28 gesucht werden. Dabei kann im zweiten Bild 21 beispielsweise derselbe Umkreis 10 als Suchgebiet verwendet werden wie im ersten Bild 1 verwendet wurde. Innerhalb des Umkreises 10 wird nun im Beispiel ein zweites Merkmal M2A 28 gefunden. Über die Beziehung des ersten weiteren Merkmals M1B 9 zum ersten Merkmal M1A 8 kann nun darauf geschlossen werden, dass das zum zweiten weiteren Merkmal M2B 29 im zweiten Bild 21 benachbarte zweite Merkmal M2A 28 identisch zum ersten Merkmal M1A 8 sein muss. Eine Identifizierung ist somit eindeutig möglich, auch wenn das zweite Merkmal alleine nicht mit dem ersten Merkmal identifizierbar wäre.

Analog zur Identifizierung des Startpunktes der Linie 5 kann beispielsweise auch der Knickpunkt 4 behandelt werden, der ebenfalls in Nachbarschaft zu einem robusten Merkmal 7 liegt.

Prinzipiell wäre es auch möglich, den Umkreis 10 zur Suche eines robusten Merkmals zu vergrößern, falls im anfänglichen Umkreis 10 kein robustes Merkmal 7 liegt. So könnte im Beispiel der Endpunkt 11 der Linie 5 auch mit einem der beiden robusten Merkmale 7 in Beziehung gesetzt werden. Da dabei auch der Abstand zum Merkmal vermerkt wird, wird auch im zweiten Bild das Merkmal in diesem oder einem ähnlichen Abstand zum robusten Merkmal gesucht. Allerdings kann es hier dann auch vorkommen, dass insbesondere bei Vorhandensein vieler Merkmale, ein falsches Merkmal auch im vorgegebenen, großen Suchradius liegt. Insgesamt ist es daher vorteilhaft, wenn der Umkreis des Suchradius möglichst klein gehalten ist, so dass nur ein weiteres oder wenige weitere Merkmale in diesem Umkreis liegen.

Bei der Suche nach benachbarten Merkmalen kann neben dem Umkreis auch eine Transformation zwischen den beiden Bildern betrachtet werden. Aus den robusten Merkmalen 7 kann eine Bewegung, also eine Translation und Rotation, zwischen den Bildern bestimmt werden. Der Umkreis zur Suche eines benachbarten Merkmals kann daher zunächst mit dieser Transformation auf das zweite Bild übertragen werden, so dass die Suche eher im richtigen Bildbereich gestartet werden kann.

Zu Verbesserung des Suchergebnisses kann auch ein erstes Merkmal in Beziehung zu zwei weiteren Merkmalen gesetzt werden. Im Beispiel könnte dann das erste Merkmal, etwa der Knickpunkt der Linie, mit beiden robusten Merkmalen verknüpft werden. Zwischen allen drei Merkmalen können dann auch kreuzweise Beziehungen definiert werden. Dadurch kann die Genauigkeit und Trefferwahrscheinlichkeit beim Identifizieren der Merkmale erhöht oder verbessert werden. Falls also in einem zweiten Bild dann Merkmale gefunden werden, bei denen alle diese Beziehungen ähnlich sind, ist die Wahrscheinlichkeit, dass sie richtig identifiziert sind, wesentlich größer als bei nur einer nachbarschaftlichen Beziehung. Mehrere solche Beziehungen helfen auch geometrische oder perspektivische Verzeichnungen und Verzerrungen auszugleichen.

Ein zusätzlicher Vorteil ergibt sich dann, wenn in einem zweiten Bild eines der robusten Merkmale nicht sichtbar ist, weil es beispielsweise verdeckt ist. In diesem Fall fehlt für das zweite Bild zwar eine der nachbarschaftlichen Beziehungen, durch die zweite Beziehung kann ein Merkmal dennoch identifiziert werden, wenn es als ähnlich genug eingestuft werden kann.

Mit diesem Verfahren ist es sogar möglich ein fehlendes Merkmal, das kein robustes Merkmal ist, zu identifizieren. Würde im zweiten Bild beispielsweise der Knickpunkt fehlen, könnte er durch eine Interpolation aus den Nachbarschaftsbeziehungen zu den beiden robusten Merkmalen in das Bild eingefügt werden. Dies funktioniert jedoch nur, solange das fehlende Merkmal innerhalb des Bildes liegt.

Der Endpunkt 11 der Struktur 2 besitzt nun keine unmittelbare Nachbarschaft zu einem robusten Merkmal 7. Dennoch kann auch für dieses Merkmal 12 eine nachbarschaftliche Beziehung definiert werden. So kann das Merkmal 12 beispielsweise als Endpunkt der angrenzenden Linie 5 definiert werden, deren Startpunkt der Knickpunkt 4 ist. Auf diese Weise können auch mehrere Merkmale miteinander in Beziehung gesetzt werden, die keine robusten Merkmale sind. Insbesondere können so Punkte, die beispielsweise als Schnittpunkt zweier Linien definiert wurden, mit den Linien verknüpft werden. Auf diese Weise entstehen nachbarschaftliche Beziehungen immer abwechselnd zwischen Punkt und Linie.

Der Knickpunkt 4 wiederum, ist durch die Nachbarschaft zu einem robusten Merkmal 7 sehr leicht eindeutig identifizierbar. Die Linie 5 als solche ist ebenfalls in dem zweiten Bild leicht erkennbar. So muss für die positive Identifizierung des Endpunkts 11 im zweiten Bild 21 lediglich bestätigt sein, dass der Endpunkt ebenfalls auf der Linie 5 durch den Knickpunkt 4 liegt.

Eine solche Bezugnahme auf eine angrenzende Linie oder ein anderes Merkmal, das kein robustes Merkmal ist, kann auch bei Vorhandensein eines weiteren Merkmals, also eines robusten Merkmals in der Nachbarschaft eines zu untersuchenden Merkmals, zusätzlich zu diesem Verwendet werden.

Die Identifikation der Merkmale zwischen den Bildern, auch mit Hilfe der Nachbarschaften, erfolgt beispielsweise durch Graphen. Dabei können topologische Graphen und Korrespondenzgraphen unterschieden werden. Ein topologischer Graph kann beispielsweise die Beziehung auf ein angrenzendes Merkmal, wie eine Linie oder dergleichen, beschreiben.

Die Fig. 3 skizziert beispielhaft die Korrespondenzfindung zwischen zwei Bildern mittels Graphen. Der Einfachheit halber seien in jedem Bild ein Linienmerkmal mit zwei angrenzenden Punktmerkmalen detektiert worden. Diese könnten in Fig. 1 der senkrechten Linie 5 zwischen Knickpunkt 4 und Endpunkt 11 entsprechen. In einem ersten Bild (links in Fig. 3) seien dies die Punktmerkmale P1a und P1b, die mit dem Linienmerkmal L1 topologisch verbunden sind. Jedes der drei Merkmale ist durch einen Kreis symbolisiert, die Nachbarschaftsbeziehung durch gestrichelte Linien. In Bild 2 (rechts in Fig. 3) sind dies analog die Merkmale P2a, P2b und L2.

Jedes Merkmal des ersten Bildes ist nun über einen Korrespondenzgraph (durchgezogene Pfeile) mit seinem entsprechenden Merkmal des zweiten Bildes verbunden. Der Korrespondenzgraph enthält dabei eine sogenannte Kostenfunktion, die die Ähnlichkeit ausdrückt. Ein geringer Wert der Kostenfunktion, also geringe Kosten, bedeuten dabei eine hohe Ähnlichkeit und damit eine große Wahrscheinlichkeit, dass die Merkmale zwischen den Bildern einander zugeordnet sind. Die Kostenfunktion kann beispielsweise die photometrische und/oder geometrische Ähnlichkeit und/oder weitere Faktoren beinhalten.

Bei dem erfindungsgemäßen Verfahren zur Korrespondenzfindung wird zudem noch die nachbarschaftliche Beziehung der Merkmale ausgewertet. Als Beispiel soll die Korrespondenz zur Linie L1 im zweiten Bild gefunden werden. Im ersten Bild besitzt die Linine L1 zwei nachbarschaftliche Beziehungen zu den Punkten P1A und P1B. Im zweiten Bild besitzt die Linie L2 auch zwei nachbarschaftliche Beziehungen zu den Punkten P2A und P2B. Aus diesem Grund wird nun zusätzlich zu der direkten Kostenfunktion C3 die Kostenfunktionen zwischen den benachbarten Punkten betrachtet. Die Kostenfunktion für die Linie berechnet sich demnach zu C3 + Min(C1,C2) + Min(C4,C5). Die Korrespondenzen werden dann durch die minimalen Werte der Kostenfunktionen bestimmt.

Diese Summierung über Kostenfunktionen kann auch über drei oder mehr Bilder erfolgen. Insbesondere können bei drei Bildern die Rückprojektionsfehler der Merkmale in die Kostenfunktion als Summand eingehen, wodurch die Korrespondenzfindung sehr stark verbessert wird.

Daneben ist es auch möglich nicht nur direkte Nachbarn zu prüfen, sondern die nachbarschaftlichen Beziehungen über N Grade mit in die Kostenfunktion aufzunehmen. Insbesondere können alle Nachbarn in einer zusammenhängenden Kette an Graphen berücksichtigt werden.

Dabei kann es durchaus sein, dass die Kostenfunktion eine nicht vollständige Zuordnung zulässt. Jedoch hat das erfindungsgemäße Verfahren den Vorteil, dass beispielsweise bei Aufnahme zusätzlicher Bilder oder wenn sich eine Kostenfunktion als ungünstig erwiesen hat, leichter Korrekturen durchführbar sind.

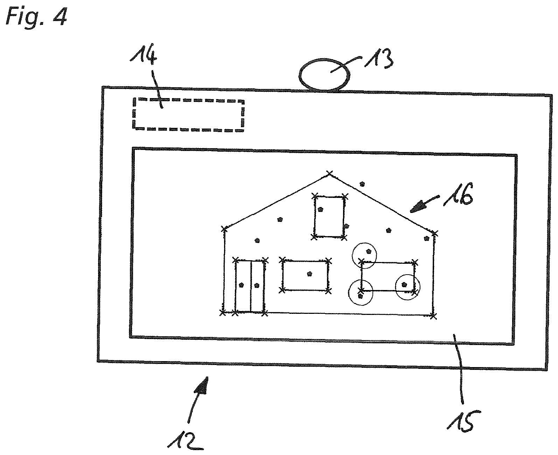

Die Fig. 4 zeigt ein Aufmaßgerät 12, das zur Durchführung des erfindungsgemäßen Verfahrens ausgebildet und geeignet ist.

Das Aufmaßgerät 12 weist eine Bildaufnahmeeinheit 13 zum Aufnehmen einer Folge von Bildern eines Objekts auf. Weiter weist das Aufmaßgerät 12 eine Datenverarbeitungseinheit 14 auf, die zu einer Ausführung eines erfindungsgemäßen Verfahrens eingerichtet ist, wobei die Datenverarbeitungseinheit 14 zu einer computergestützten Berechnung einer geometrischen Größe eines in den Bildern der Folge abgebildeten Untersuchungsobjektes anhand von mit dem Verfahren berechneten 3D-Koordinaten eingerichtet ist.

Zusätzlich weist das Aufmaßgerät 12 einen Bildschirm 15 als Ausgabemittel auf, auf dem ein erstelltes Modell 16 und/oder ein berechneter Wert einer geometrischen Größe darstellbar sind.

Die Erfindung beschreibt ein Verfahren zur Identifikation von korrespondierenden Bildbereichen in einer Folge von Bildern 1; 21 wobei jedem Merkmal P1a, P2a aus einem ersten Bild nun mittels Korrespondenzgraphen eines oder mehrere Merkmale P2a,P2b aus einem zweiten Bild zugeordnet werden. Die Kosten C1-C5, die mit jeder Zuordnung verbunden sind, werden durch Funktionen dargestellt. Anhand dieser Kosten erfolgt die konkrete Auswahl einer eindeutigen Korrespondenz für jedes Merkmal, die dann für die weiteren Berechnungen verwendet wird.

### Bezugszeichenliste

- 1: erstes Bild
- 2: Struktur
- 3: Startpunkt/Endpunkt
- 4: Knickpunkt
- 5: Linie
- 6: Merkmal
- 7: robustes Merkmal
- 8: erstes Merkmal
- 9: erstes weiteres Merkmal
- 10: Umkreis
- 11: Endpunkt
- 12: Aufmaßgerät
- 13: Bildaufnahmeeinheit
- 14: Datenverarbeitungseinheit
- 15: Bildschirm
- 16: Modell
- 21: zweites Bild
- 24: Punkt
- 25: Linie
- 28: zweites Merkmal
- 29: zweites weiteres Merkmal
- P1a: Punktmerkmal
- P1b: Punktmerkmal
- P2a: Punktmerkmal
- P2b: Punktmerkmal
- L1: Linienmerkmal
- L2: Linienmerkmal
- C1...C5: Kostenfunktion

## Patentansprüche

1. Verfahren zur Identifikation von korrespondierenden Bildbereichen in einer Folge von Bildern (1; 21), wobei in den Bildern (1; 21) jeweils eine Vielzahl von Merkmalen (6, 7) computergestützt detektiert und zu den Merkmalen (6, 7) jeweils Deskriptoren computergestützt extrahiert werden, wobei ein erstes Merkmal M1Aa (8) eines ersten Bildes (1) und ein zweites Merkmal M2A (28) eines zweiten Bildes (21) der Folge als zueinander inhaltlich korrespondierend erkannt werden, wenn zumindest die zugehörigen Deskriptoren nach einer vorgegebenen Regel zueinander ähnlich sind, so dass ein erster Bildbereich des ersten Bildes (1) mit dem ersten Merkmal M1A (8) als inhaltlich korrespondierend zu einem zweiten Bildbereich des zweiten Bildes (21) mit dem zweiten Merkmal M1B (28) erkannt wird, **dadurch gekennzeichnet, dass** für die Erkennung einer inhaltlichen Korrespondenz zusätzlich geprüft wird, ob wenigstens ein erstes weiteres Merkmal M2A (9), dass zu dem ersten Merkmal M1A (8) in dem ersten Bild (1) benachbart ist, zu einem zweiten weiteren Merkmal M2B (29), das in dem zweiten Bild (21) zu dem zweiten Merkmal M1B (28) benachbart ist, nach einer vorgegeben Regel ähnlich ist.

2. Verfahren nach Anspruch 1, **dadurch gekennzeichnet, dass** eine inhaltliche Korrespondenz zwischen dem ersten Merkmal M1A (8) und dem zweiten Merkmal M2A (28) bestätigt wird, wenn die Prüfung ergab, dass das erste weitere Merkmal M1B (9) und das zweite weitere Merkmal M2B (29) zueinander ähnlich sind, und/oder verworfen wird, wenn die Prüfung ergab, dass das es kein erstes weiteres Merkmal M1B (9) und kein zweites weiteres Merkmal M2B (29) gibt, die zueinander ähnlich sind.

3. Verfahren nach Anspruch 1 oder 2, **dadurch gekennzeichnet, dass** das erste Merkmal M1A (8) und das zweite Merkmal M2A (9) durch eine Ecken- und/oder Kantendetektion detektiert wurden und/oder keine robusten Merkmale (7) sind.

4. Verfahren nach einem der Ansprüche 1 bis 3, **dadurch gekennzeichnet, dass** das erste weitere Merkmal M1B (9) und das zweite weitere Merkmal M2B (29) optimiert für eine inhaltliche Zuordnung von Bildbereichen in einer Folge von Bildern und/oder robuste Merkmale (7) sind.

5. Verfahren nach einem der Ansprüche 1 bis 4, **dadurch gekennzeichnet, dass** ein erstes weiteres Merkmal als benachbart zu einem ersten Merkmal gilt, wenn es im ersten Bild innerhalb eines vorgegebenen Umkreises um das erste Merkmal liegt und/oder wenn ein Graph bestimmbar ist, der eine Beziehung zwischen dem ersten Merkmal und dem ersten weiteren Merkmal modelliert, insbesondere als ein topologischer Graph.

6. Verfahren nach einem der Ansprüche 1 bis 5, **dadurch gekennzeichnet, dass** die Ähnlichkeiten zwischen Merkmalen des ersten Bildes (1) und Merkmalen des zweiten Bildes (21) durch Korrespondenzgraphen, insbesondere mit einer Kostenfunktion, bestimmt wird.

7. Verfahren zur Berechnung von 3D-Koordinaten zu einem ersten Merkmal M1A (8) in einem ersten Bild (1) einer Folge von Bildern und einem zweiten Merkmal M2A (28) eines zweiten Bildes (21) der Folge, wobei ein Verfahren zur Identifikation von korrespondierenden Bildbereichen nach einem der vorangehenden Ansprüche ausgeführt wird und anhand der vorzugsweise bestätigten inhaltlichen Korrespondenzen eine 3D-Koordinate zu dem ersten Merkmal M1A (8) und zweiten Merkmal M2A (28) computergestützt berechnet werden, insbesondere in einem zumindest aus den ersten weiteren Merkmal M1B (9) und dem zweiten weiteren Merkmal M2B (29) generierten 3D-Modell.

8. Aufmaßgerät (12) mit einer Kamera (13) zu einer Aufnahme einer Folge von Bildern und einer Datenverarbeitungseinheit (14), die zu einer Ausführung eines Verfahrens nach dem vorangehenden Anspruch eingerichtet ist, wobei die Datenverarbeitungseinheit (14) zu einer computergestützten Berechnung einer geometrischen Größe eines in den Bildern der Folge abgebildeten Untersuchungsobjektes anhand von mit dem Verfahren berechneten 3D-Koordinaten eingerichtet ist, insbesondere wobei Ausgabemittel (15) zu einer Ausgabe eines berechneten Wertes der geometrischen Größe ausgebildet sind.
